# EUROPEAN PATENT SPECIFICATION

(11) **EP 2 230 162 B1**
(45) Date of publication and mention of the grant of the patent: **12.12.2018**
(21) Application number: 09179203.6
(22) Date of filing: 15.12.2009
(51) Int. Cl.: B62J 6/00, B62J 6/02

(54) **Motorcycle**
Motorrad
Motocyclette

(30) Priority: 16.03.2009 JP 2009062507
(43) Date of publication of application: 22.09.2010
(73) Proprietor: Yamaha Hatsudoki Kabushiki Kaisha, Shizuoka-ken Shizuoka 438-8501 (JP)
(72) Inventor: Morishita, Kensuke, Shizuoka-ken 438-8501 (JP)
(74) Representative: Zimmermann, Tankred Klaus

(56) References cited:
- EP-A1- 1 452 430
- EP-A1- 1 849 697
- GB-A- 647 670
- US-A- 6 036 339
- US-A1- 2005 083 703
- US-A1- 2009 231 869

## Description

### BACKGROUND OF THE INVENTION

### 1. Field of the Invention

The present invention relates to a motorcycle, and more particularly, to the supporting structure for right and left flashers indicating the direction in which the motorcycle turns.

### 2. Description of the Related Art

Conventionally, a motorcycle, in which the headlight is supported by the front suspension so that the direction of the headlight may turn in accordance with the handlebar operation, is available. In such motorcycle, a stay fixed to the front suspension is arranged behind the headlight, and the headlight is fixed to the stay. Further, the headlight includes a reflector housing a bulb, and an electric wire or harness which are connected to terminals of the bulb are arranged behind the reflector.

In a motorcycle disclosed in JP 2005-324703 A, right and left flashers to indicate the direction in which the motorcycle turns are arranged above the headlight, and the headlight and the flashers are integrally retained in a headlight case. Further, a cover (referred as headlamp housing in JP 2005-324703 A), which is formed so as to cover a back surface of the reflector from outer sides in the right-left direction of the motorcycle, is fixed to the headlight case. In the motorcycle disclosed in JP 2005-324703 A, the cover prevents the electric wire and the stay located behind the headlight from being exposed, thereby being capable of improving an external appearance of the motorcycle.

Further, in the motorcycle disclosed in JP 2005-324703 A, in order to make the irradiation direction of the headlight adjustable upward and downward, the headlight case retaining both the headlight and the flashers is movably supported.

EP 1 849 697 A1, which is considered as the closest prior art, discloses a headlight assembly for a motorcycle including a hollow casing structure which is adapted for receiving a front headlight insert and a display unit. Two lateral side faces of the hollow casing are formed as protrusions for holding right and left flashers. The casing structure including the front headlight insert, the display and both flashers are pivotally supported at a motorcycle front fork in order to adjust the irradiation direction of the headlight. Thus, when adjusting the irradiation direction of the headlight, the whole casing structure including the front headlight insert, the display unit and both flashers are pivoted together.

### SUMMARY OF THE INVENTION

It is an object of the present invention is therefore to provide a motorcycle in which the visibility of the flashers and an external appearance of the motorcycle are improved.

In order to solve the above-mentioned problem, according to the present invention, which invention is defined by claim 1, the motorcycle includes a headlight unit, right and left flashers, and a meter device. The headlight unit includes a headlight arranged in front of the head pipe supporting the steering shaft, and the headlight unit is supported by the front suspension. The right and left flashers are arranged above the headlight unit and supported by the front suspension. The meter device is arranged above the right and left flashers. The headlight unit is supported so that the irradiation direction of the headlight is adjustable upward and downward independently of the right flasher and left flashers. Each of the flashers includes a supported portion supported by the front suspension, an extending portion extending from the supported portion outwardly in the right-left direction of the motorcycle, and a flashing portion positioned at the end portion of the extending portion and housing a bulb. The headlight unit comprises a cover including right and left side surface portions, which are arranged so as to cover the back surface of the headlight from outer sides in the right-left direction of the motorcycle, and an upper surface portion which covers at least a part of the supported portion from the front. A front portion of the meter device is formed to be positioned further forward than the supported portion.

According to the present invention, even when the irradiation direction of the headlight is adjusted upward and downward, it is possible to maintain the direction of the flashers, and to improve the visibility of the flashers. Further, the cover of the headlight unit includes the right and left side surface portions, and the upper surface portion, and thus it is possible to improve an external appearance of the motorcycle.

### BRIEF DESCRIPTION OF THE DRAWINGS

In the accompanying drawings:
FIG. 1 is a side view of a motorcycle according to an embodiment of the present invention;
FIG. 2 is a side view of the front portion of the motorcycle;
FIG. 3 is a front view of the motorcycle;
FIG. 4 is a plan view of the front portion of the motorcycle;
FIG. 5 is an exploded side view of the headlight unit, the flashers, and the meter device of the motorcycle;
FIG. 6 is an exploded front view of the headlight unit, the flashers, and the meter device;
FIG. 7 is an exploded plan view of the headlight unit, the flashers, and the meter device;
FIG. 8 is a front view of the front suspension of the motorcycle, which illustrates a state in which a stay for supporting the headlight unit is fixed to the front suspension; and
FIG. 9 is a perspective view of the stay.

### DETAILED DESCRIPTION OF THE INVENTION

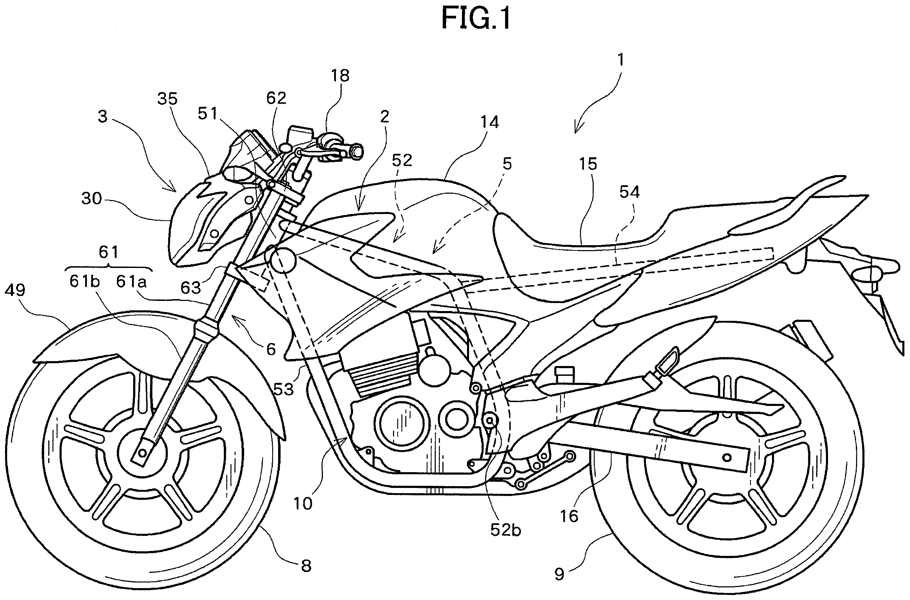

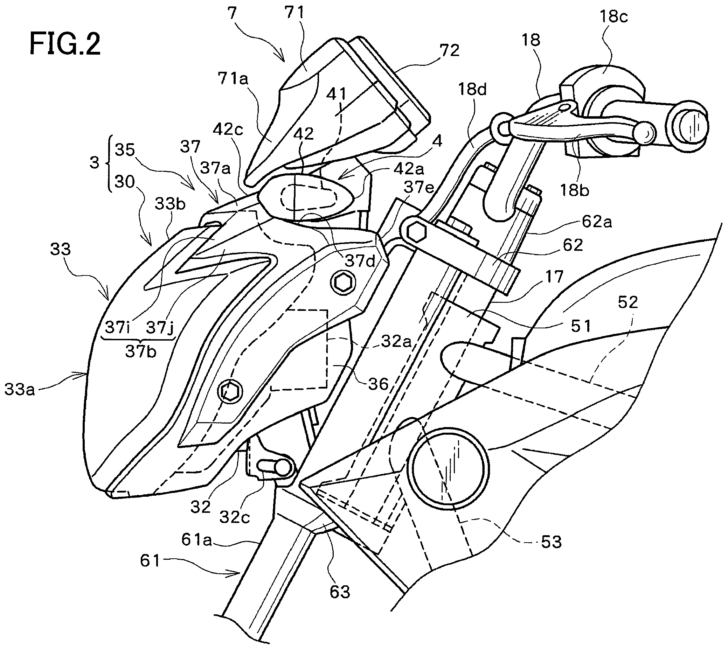

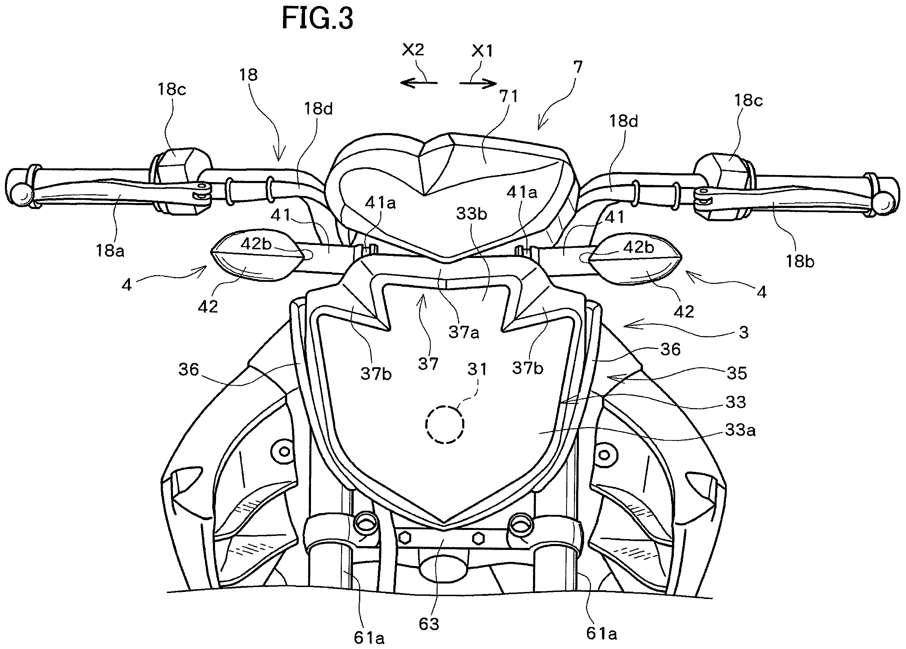

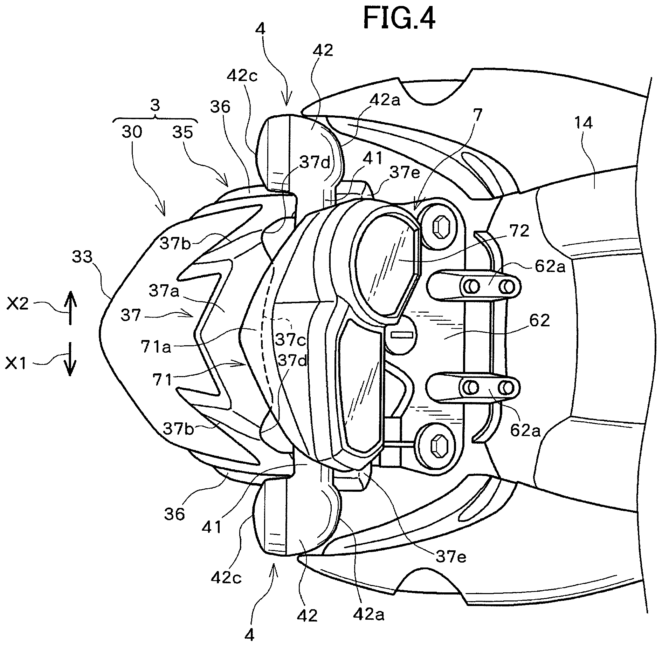

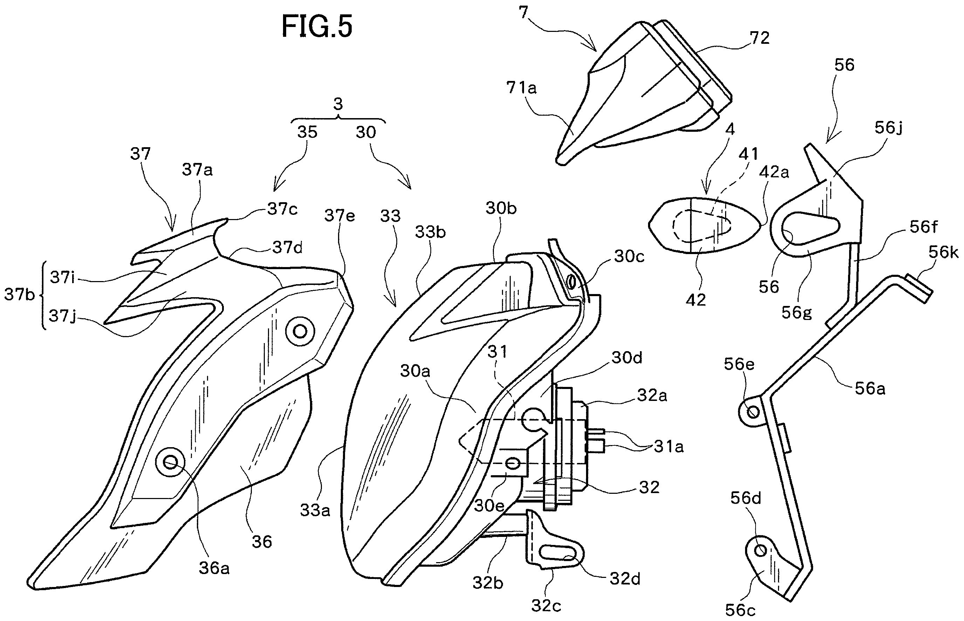

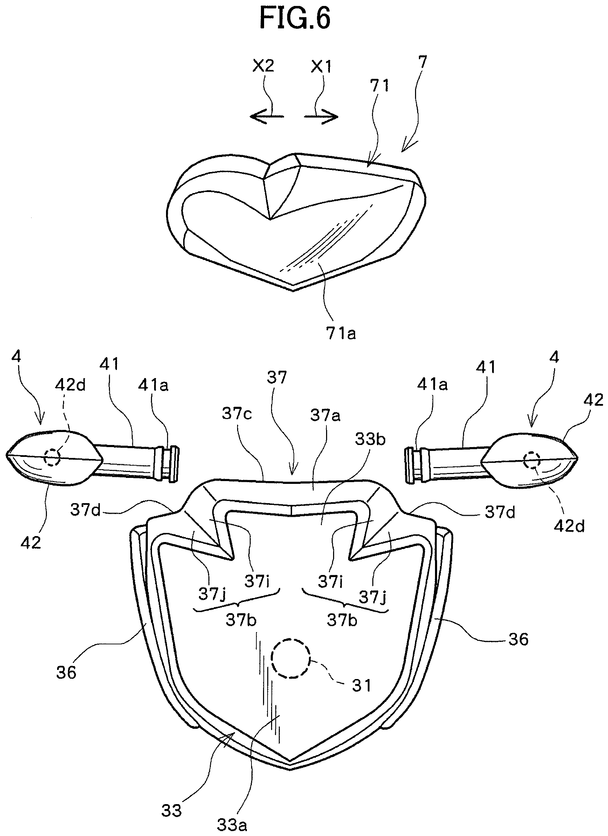

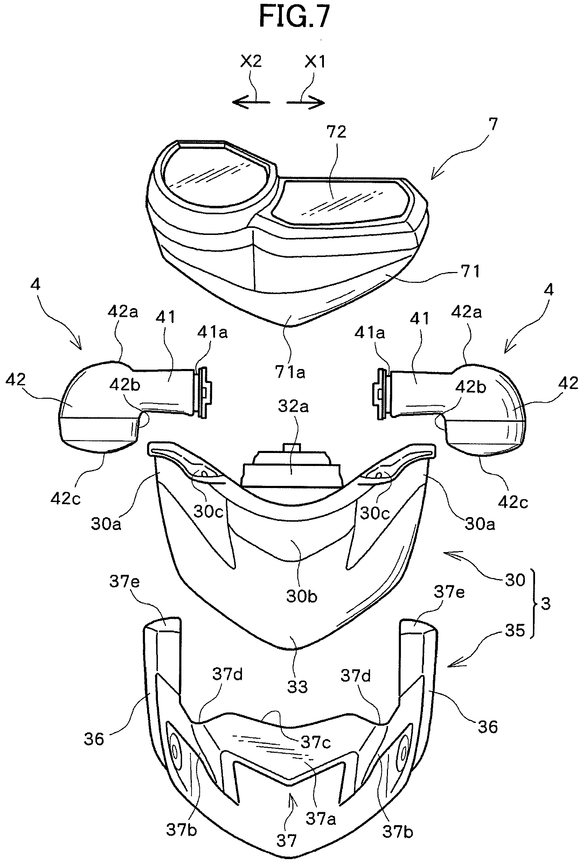

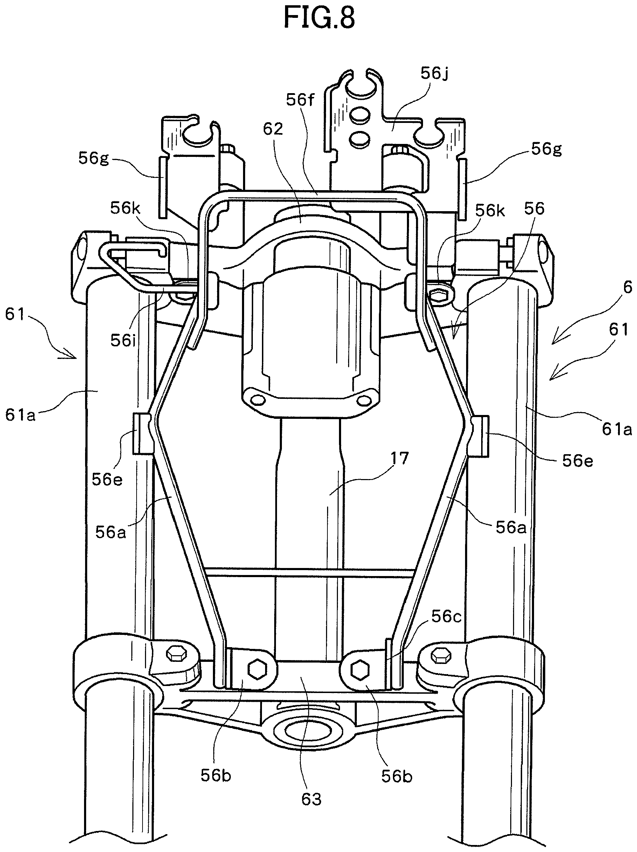

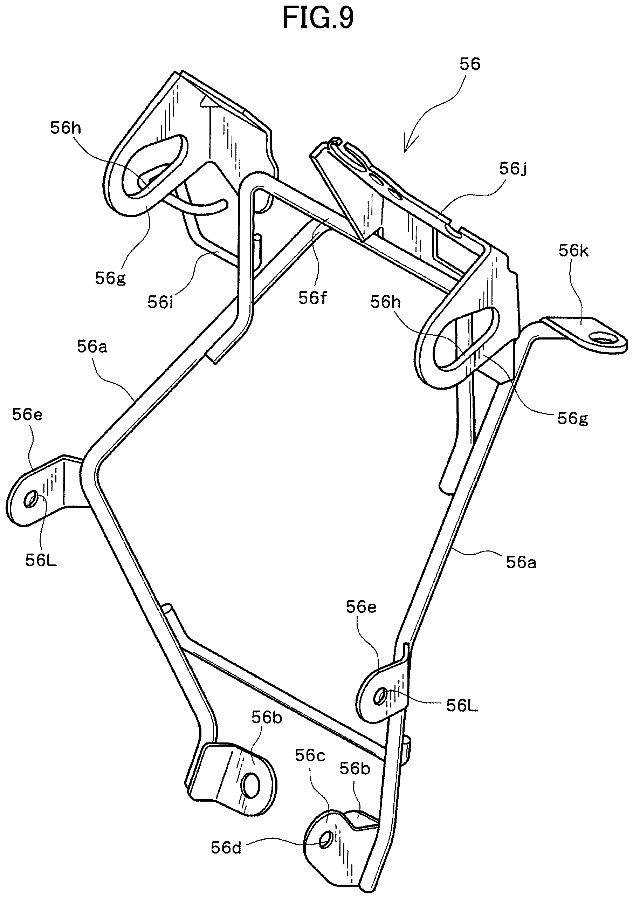

In the following, an embodiment of the present invention is described with reference to the drawings. FIG. 1 is a side view of a motorcycle 1 as an example according to the embodiment of the present invention. FIG. 2 is a side view of the front portion of the motorcycle 1. FIG. 3 is a front view of the motorcycle 1. FIG. 4 is a plan view of the front portion of the motorcycle 1. FIGS. 5, 6, and 7 are exploded views of a headlight unit 3, flashers 4, and a meter device 7 of the motorcycle 1. FIG. 5 is a side view thereof, FIG. 6 is a front view thereof, and FIG. 7 is a plan view thereof. FIG. 8 is a front view of a front suspension 6 of the motorcycle 1. In FIG. 8, a stay 56 for supporting the headlight unit 3 is fixed to the front suspension 6. FIG. 9 is a perspective view of the stay 56.

As illustrated in FIG. 1, a body frame 5 of the motorcycle 1 includes a head pipe 51 at the forefront portion thereof. Further, the body frame 5 includes a main frame 52 extending rearward from the head pipe 51. A fuel tank 14 is arranged on the main frame 52 and supported by the main frame 52. An engine 10 is arranged below the fuel tank 14. The main frame 52 extends rearward above the engine 10. Then, the main frame 52 is bent downward to extend downward behind the engine 10. A rear arm 16 extending in a front-rear direction of the motorcycle 1 is arranged behind the engine 10. A pivot support portion 52b supporting the front end of the rear arm 16 via a pivot (not shown) is provided in the lower portion of the main frame 52. The rear arm 16 supports the rear wheel 9 at the rear end of the rear arm 16, and is swingable upward and downward around the pivot together with the rear wheel 9. A seat 15, astride which a rider sits, is arranged behind the fuel tank 14. The body frame 5 includes a seat rail 54 arranged below the seat 15. The seat rail 54 supports the seat 15 from below.

Further, the body frame 5 includes a down frame 53 extending from the head pipe 51 diagonally rearward and downward. The down frame 53 extends diagonally downward in front of the engine 10, and is then bent rearward. A rear portion of the down frame 53 extends rearward under the engine 10 to support the engine 10.

A front suspension 6 extending diagonally in the vertical direction is arranged in front of the engine 10 and the fuel tank 14. The front suspension 6 supports a front wheel 8 at its lower end. As illustrated in FIG. 1 or 3, the front suspension 6 includes right and left shock absorbers 61 which are spaced away from each other in the right-left direction (direction indicated by arrows X1 and X2 of FIG. 3) of the motorcycle 1. Further, the front suspension 6 includes an upper bracket 62 and an under bracket 63 which are spaced away from each other in the vertical direction and bridge between the right and left shock absorbers 61. The right and left shock absorbers 61 are arranged so as to extend diagonally in the vertical direction, and upper portions thereof are held by both end portions of the upper bracket 62 and both end portions of the under bracket 63. In this regard, each of the shock absorbers 61 includes an inner tube 61a and an outer tube 61b which is movable upward and downward with respect to the inner tube 61a. The front wheel 8 is supported by the lower ends of the outer tubes 61b.

As illustrated in FIG. 2, a steering shaft 17 is arranged between the inner tubes 61a located on the upper portions of the right and left shock absorbers 61. An upper end and a lower end of the steering shaft 17 are fixed to the upper bracket 62 and the under bracket 63, respectively. A handlebar 18 is arranged above the steering shaft 17. The handlebar 18 is fixed to the upper bracket 62 by a holder 62a provided on the upper bracket 62. Further, the steering shaft 17 is inserted inside the head pipe 51 to be turnably supported by the head pipe 51. With this structure, the handlebar 18 can be turned right and left around the steering shaft 17 together with the front suspension 6 and the front wheel 8.

A handle switch 18c, which includes switches for turning on and off a headlight 30 and flashers 4, is fixed onto the handlebar 18. Further, the handlebar 18 is provided with a brake lever 18a and a clutch lever 18b. An electric wire (not shown) connected to the handle switch 18c and a wire 18d connected to the levers 18a and 18b pass through behind the headlight unit 3 to extend downward.

As illustrated in FIG. 2 or 5, the headlight unit 3 includes the headlight 30, and the headlight 30 is arranged in front of the head pipe 51. Further, the headlight unit 3 includes a cover 35 surrounding the outer peripheral edge of the headlight 30 and formed so as to extend rearward. The headlight 30 includes a bulb 31, a reflector 32, and a lens 33. The reflector 32 has a front surface which has a substantially cup-shape opening forward, and the front surface reflects light of the bulb 31 forward. The lens 33 is located in front of the bulb 31, and is arranged so as to cover the reflector 32 and the bulb 31 from the front.

The reflector 32 includes a bulb retaining portion 32a in the rear portion thereof. The bulb retaining portion 32a is formed in a cylindrical shape projecting rearward from the back surface of the reflector 32. The bulb 31 is inserted into the bulb retaining portion 32a from the rear, and is retained at the bulb retaining portion 32a. In this manner, the reflecting surface (the front surface of the reflector 32) which reflects the light of the bulb 31 forward, and the portion (the bulb retaining portion 32a) which functions as a housing for retaining the bulb 31 are integrally formed in the reflector 32. In this regard, the structure of the reflector is not limited thereto, and the housing and the portion forming the reflecting surface may be formed separately from each other. Terminals 31a protruding rearward from the bulb 31 are provided at the rear end of the bulb 31. The electric wire (not shown) which supplies an electric power to the bulb 31 is connected to the terminals 31a. This wire extends rearward from the terminals 31a, and is arranged along the main frame 52, for example. In this regard, the bulb 31 is located in front of the head pipe 51.

The lens 33 includes a lower lens portion 33a in the lower portion thereof. The lower lens portion 33a is located in front of the bulb 31, and the light from the bulb 31 passes through the lower lens portion 33a. Further, the lens 33 includes an upper lens portion 33b in the upper portion thereof. The width of the upper lens portion 33b is smaller than that of the lower lens portion 33a. For example, a position lamp (not shown) is arranged behind the upper lens portion 33b.

In the example described herein, the headlight 30 has a substantially triangular shape in its front view (see FIG. 3). The cover 35 has a substantially triangular frame-shape corresponding to the contour of the headlight 30. The headlight 30 is fitted onto the cover 35 from the rear. As illustrated in FIG. 5, the cover 35 includes right and left side surface portions 36 and an upper surface portion 37. The side surface portions 36 extend rearward from right and left edges 30a of the headlight 30 (right and left edges of the reflector 32), respectively, and cover the back surface of the reflector 32 from the outer sides in the right-left direction (that is, cover the back surface in directions indicated by the arrows X1 and X2 of FIG. 3). Further, the side surface portions 36 cover the bulb retaining portion 32a, which is formed in the rear portion of the reflector 32, from the outer sides in the right-left direction. The upper surface portion 37 extends from an upper edge 30b of the headlight 30 diagonally rearward and upward.

The headlight 30 is arranged inside the cover 35, and is fixed to the cover 35. In this example, as illustrated in FIG. 5, wall-shaped fixation portions 30c are formed on the upper portion of the headlight 30. In this example, the fixation portions 30c are formed at the upper edge of the reflector 32, and are located higher up than the edge of the lens 33. Meanwhile, fixation portions (not shown), which face the fixation portions 30c in the front-rear direction, are formed on the inner surface of the cover 35. The fixation portions 30c and the fixation portions of the cover 35 are fixed to each other with bolts or screws. Further, fixation portions 30e, which face the inner surface of the cover 35 in the right-left direction, are respectively formed on the side surfaces of the headlight 30. Meanwhile, fixation holes 36a are formed on the side surface portions 36 of the cover 35, respectively. Holes are also formed in the fixation portions 30e, and bolts or screws are fitted into the holes of the fixation portions 30e and the fixation holes 36a. Thus, the cover 35 is fixed to the headlight 30.

The headlight unit 3 is supported by the front suspension 6 so that the irradiation direction of the headlight 30 can be adjusted upward and downward. In this example, the headlight unit 3 is supported with a stay 56. Specifically, the stay 56 is fixed to the front suspension 6, and the headlight 30 is fixed to the stay 56 so that the irradiation direction of the headlight 30 can be adjusted upward and downward.

In detail, as illustrated in FIG. 8 or 9, the stay 56 includes a pair of right and left rods 56a formed of elongated metal members. Each of the rods 56a is arranged to extend diagonally in the vertical direction behind the headlight 30. Plate-shaped brackets 56b are provided at the lower ends of the rods 56a, respectively. The brackets 56b are fixed to the under bracket 63 of the front suspension 6 from the front.

Plate-shaped brackets 56e protruding forward are provided on middle portions of the rods 56a, respectively. Meanwhile, on each of the side surfaces of the headlight 30, a fixation portion 30d in which a fixation hole is formed is provided (see FIG. 5). Screws or bolts are inserted into the fixation holes of the fixation portions 30d and holes 56L of the brackets 56e in the right-left direction, and the fixation portions 30d and the brackets 56e are fixed to each other. With this structure, the headlight 30 is pivotable around the screws, etc. which fix the fixation portions 30d and the brackets 56e to each other. Further, a plate-shaped bracket 56c extending forward is provided at the lower end of one of the rods 56a. A hole 56d is formed at the end portion of the bracket 56c. Meanwhile, a boss 32b extending rearward from the outer surface (back surface) of the reflector 32 is provided on the lower portion of the headlight 30, and a bracket 32c is fixed to the tip end of the boss 32b. A hole 32d elongated in the front-rear direction is formed in the bracket 32c. A bolt or a screw is inserted into the hole 32d and the hole 56d, and thus the bracket 32c and the bracket 56c are fixed to each other. Since the hole 32d is an elongated hole, the lower portion of the headlight 30 is allowed to move forward and rearward around the screws, etc., which fix the fixation portions 30d and the brackets 56e to each other. With this structure, it is possible to adjust the irradiation direction of the headlight 30.

Note that in this example, the cover 35 is fixed to the headlight 30, and the headlight 30 is fixed to the front suspension 6. However, the supporting structure for the headlight 30 is not limited thereto. For example, the cover 35 may be fixed to the front suspension 6.

As illustrated in FIG. 3, right and left flashers 4 to indicate the direction in which the motorcycle 1 turns are arranged above the headlight 30. The right and left flashers 4 are configured separately from the headlight unit 3. As illustrated in FIGS. 5 to 7, each of the flashers 4 includes a supported portion 41a and an extending portion 41. The supported portion 41a is supported by the front suspension 6. The extending portion 41 has the supported portion 41a at its end portion, and extends from the supported portion 41a outwardly in the right-left direction. Further, each of the flashers 4 includes a flashing portion 42 which is provided at the end portion of the extending portion 41 and houses a bulb 42d. The extending portion 41 has a cylindrical shape that is open inward in the right-left direction, and the electric wire (not shown) connected to the bulb 42d in the flashing portion 42 passes inside the extending portion 41 to extend inward in the right-left direction.

The supported portions 41a are fixed to a stay extending from the front suspension 6. In this example, the supported portions 41a are fixed to the stay 56 supporting the headlight unit 3. Specifically, as illustrated in FIG. 9, the stay 56 includes a bridge 56f. The bridge 56f extends upward from the middle portions of the rods 56a, and bridges between the right and left rods 56a. Support plates 56g extending forward from the bridge 56f are fixed to the bridge 56f. In each of the support plates 56g, a hole 56h having an inner edge corresponding to the contour of the extending portion 41 of the flasher 4 is formed. The supported portions 41a is respectively fitted into the hole 56h. In the outer peripheral surface of the supported portion 41a, a groove extending in the peripheral direction thereof is formed. The inner edge of the hole 56h is sandwiched between the side surfaces of this groove. In this manner, the flashers 4 are fixed to the stay 56, and the flashers 4 and the stay 56 are restricted in movement relatively to each other. Therefore, when the irradiation direction of the headlight 30 is adjusted, only the headlight unit 3 moves. That is, the irradiation direction of the headlight 30 is allowed to be adjusted independently of the right and left flashers 4. Meanwhile, when the front suspension 6 turns right and left in accordance with the handlebar operation by a rider, the flashers 4, the headlight unit 3, and the front suspension 6 turn right and left integrally with each other.

In this regard, a clamp 56i formed by bending an elongated metal member at a plurality of points of the member is fixed to the bridge 56f. The clamp 56i retains the electric wire connected to the handle switch 18c, and the wire 18d.

As described above, the cover 35 which constitutes a part of the headlight unit 3 includes the side surface portions 36 and the upper surface portion 37. As illustrated in FIG. 2 or 3, the side surface portions 36 are located under the extending portions 41 of the flashers 4 and cover the rear portion of the reflector 32 from the outer sides in the right-left direction. In detail, the side surface portions 36 respectively extend rearward from the right and left edges 30a of the headlight 30 (that is, the edges of the reflector 32) to cover the bulb retaining portion 32a formed in the rear portion of the reflector 32 from the outer sides in the right-left direction. Particularly, in this example, the side surface portions 36 extend further rearward than the bulb retaining portion 32a and the terminals 31a of the bulb 31.

The upper surface portion 37 extends rearward from the upper edge 30b of the headlight 30 (that is, the upper edge of the reflector 32), and is inclined upward. Further, the upper surface portion 37 is located in front of the supported portions 41a to cover a part of each of the supported portions 41a from the front. In this example, the upper surface portion 37 covers the lower portions of the supported portions 41a from the front. Further, the upper surface portion 37 extends rearward below the extending portions 41, to be continuous with the side surface portions 36. Specifically, the upper surface portion 37 includes a center surface portion 37a arranged to extend from the position in front of the supported portion 41a of one of the flashers 4 to the position in front of the supported portion 41a of the other of the flashers 4. Further, the upper surface portion 37 includes outer surface portions 37b further extending outward in the right-left direction from the center surface portion 37a. The upper edge (rear edge) 37c of the center surface portion 37a is located in front of the supported portions 41a, and the center surface portion 37a covers the lower portions of the supported portions 41a from the front. That is, the position of the upper edge 37c is higher than the lowest positions of the outer peripheral surfaces of the supported portions 41a. Rear edges (upper edges) 37d of the outer surface portions 37b extend rearward below the extending portions 41. In other words, the extending portions 41 extend outward in the right-left direction to pass behind the rear edges 37d of the outer surface portions 37b. The rear edges 37d of the outer surface portions 37b (upper edges of the side surface portions 36) extend rearward beyond the extending portions 41, and rear ends 37e of the outer surface portions 37b are located further rearward than rear ends 42a of the flashing portions 42 of the flashers 4.

In this regard, as described above, the headlight unit 3 is supported so that the irradiation direction of the headlight 30 can be adjusted upward and downward. Therefore, the height of the upper edge of the upper surface portion 37, that is, the height of the upper edge 37c of the center surface portion 37a and the height of the rear edges 37d of the outer surface portions 37b, change in accordance with a posture of the headlight unit 3. In this example, even in a case where the headlight unit 3 is arranged so that the irradiation direction of the headlight 30 is directed diagonally downward and the position of the upper edge 37c of the center surface portion 37a becomes lowest, the position of the upper edge 37c is higher than the lowest position on the outer peripheral surfaces of the supported portions 41a.

The upper edges 37c and 37d of the upper surface portion 37 are recessed so as to avoid the extending portions 41. That is, the upper edges 37c and 37d of the upper surface portion 37 are curved along the outer peripheral surfaces of the extending portions 41. In this example, as illustrated in FIG. 4 or 7, the upper edges (rear edges) 37d of the outer surface portions 37b are located in front of the extending portions 41. The upper edges 37d of the outer surface portions 37b extend from the upper edge (rear edge) 37c of the center surface portion 37a outwardly in the right-left direction and diagonally forward, and then extend rearward. In this manner, the upper edges 37d of the upper surface portion 37 are recessed so as to avoid the extending portions 41, and thus the flashers 4 are allowed be arranged close to the cover 35 without involving interference between the flashers 4 and the headlight unit 3. As a result, it is possible to prevent the headlight unit 3 and the flashers 4 from being increased in size in the front-rear direction. In this regard, a thickness (width) of the extending portions 41 is smaller than a width of the flashing portions 42 in both the vertical direction and the front-rear direction. With this structure, the flashers 4 are allowed to be arranged closer to the cover 35.

As illustrated in FIG. 6, the outer surface portions 37b are recessed. In detail, each of the outer surface portions 37b includes a first inclined surface portion 37i and a second inclined surface portion 37j. The first inclined surface portion 37i extends outward in the right-left direction from the center surface portion 37a to be inclined downward. The second inclined surface portion 37j extends outwardly from the first inclined surface portion 37i to reach the side surface portion 36.

As illustrated in FIG. 3, the flashing portions 42 are located further outward in the right-left direction than the side surface portions 36 of the cover 35. In this example, portions 42b located most inwardly in the flashing portions 42 (portions close to the center in the right-left direction) are located just above the side surface portions 36 of the cover 35. The extending portions 41 extend outward in the right-left direction beyond the positions of the shock absorbers 61. That is, in a front view of the motorcycle 1, the flashing portions 42 are located further outward than the right and left shock absorbers 61, and the supported portions 41a are located further inward than the right and left shock absorbers 61. As illustrated in FIG. 2, in a side view of the motorcycle 1, forefront portions 42c of the flashing portions 42 are located further forward than the rear end of the headlight 30. In this example, the bulb retaining portion 32a is provided in the rear portion of the headlight 30, and the forefront portions 42c are located further forward than the rear end of the bulb retaining portion 32a.

A meter device 7 displaying running conditions of the motorcycle 1, such as a vehicle speed and a rotational speed of the engine, is arranged above the headlight 30. The meter device 7 is located above the supported portions 41a of the flashers 4. The meter device is formed to be swelled further forward than the supported portions 41a so that the front portion of the meter device 7 is located further forward than the supported portions 41a. In detail, the meter device 7 includes a housing 71 housing electronic components, etc. provided in the meter device 7. The housing 71 is formed to be swelled diagonally forward and downward from a display surface 72 of the meter device 7. The housing 71 includes a swelling portion 71a in the front portion thereof. The swelling portion 71a is swelled further forward than the supported portions 41a in a side view of the motorcycle 1, and the front end of the swelling portion 71a is located anterior to the supported portions 41a in the side view of the motorcycle 1. In this example, the front end of the swelling portion 71a is positioned lower than the highest portions on the outer peripheral surfaces of the supported portions 41a. As illustrated in FIG. 4, the supported portions 41a are located under the housing 71, and are covered with the housing 71 from above. In this regard, in this example, the width in the right-left direction of the swelling portion 71a is formed to decrease toward its forward end. Therefore, the swelling portion 71a has a substantially triangular shape in a front view thereof (see FIG. 3). As a result, in a front view of the motorcycle 1, the supported portions 41a are slightly exposed from between the upper surface portion 37 and the swelling portion 71a. With this structure, the supported portions 41a can be made less apparent. Simultaneously, when the flashers 4 are required to be dismounted, for example, when the bulbs 42d are required to be replaced, a worker can easily recognize the positions of the supported portions 41a.

As illustrated in FIG. 3, the upper surface portion 37 of the cover 35 is formed to overlap the meter device 7 in the front view of the motorcycle 1. In detail, the center surface portion 37a of the upper surface portion 37 overlaps the swelling portion 71a of the meter device 7. That is, the front end of the swelling portion 71a is located lower than the upper edge 37c of the center surface portion 37a and located further forward than the upper edge 37c. In addition, as illustrated in FIG. 4, also in a plan view of the motorcycle 1, the center surface portion 37a of the upper surface portion 37 overlaps the swelling portion 71a of the meter device 7.

The meter device 7 is supported by the stay 56 together with the flashers 4 and the headlight unit 3. Specifically, as illustrated in FIGS. 8 and 9, a support plate 56j is provided on the bridge 56f of the stay 56. The support plate 56j is arranged to face a lower surface of the housing 71 of the meter device 7. The housing 71 is disposed on the support plate 56j, and the lower surface thereof is fixed onto the support plate 56j. With this structure, when the front suspension 6 turns right and left in accordance with the handlebar operation by a rider, the meter device 7 turns right and left together with the headlight unit 3 and the flashers 4. In this regard, as illustrated in FIG. 8, a plurality of holes, through which the electric wires or the like connected to the meter device 7 pass, are formed in the support plate 56j.

As described above, in the motorcycle 1, the headlight unit 3 is supported so that the irradiation direction of the headlight 30 can be adjusted upward and downward independently of the right and left flashers 4. With this structure, when the irradiation direction of the headlight 30 is adjusted upward and downward, the directions of the flashers 4 can be maintained. As a result, compared with a motorcycle in which the flashers 4 move upward and downward together with the headlight 30, it is possible to improve visibility of the flashers 4. Further, the cover 35 includes the right and left side surface portions 36 and the upper surface portion 37. The right and left side surface portions 36 are arranged so as to cover the back surface of the headlight 30 (back surface of the reflector 32, in this case) from the outer sides in the right-left direction, and the upper surface portion 37 is located in front of the supported portions 41a to cover a part of each of the supported portions 41a from the front. In addition, the front portion of the meter device 7 is located further forward than the supported portions 41a. With this structure, it is possible to improve an external appearance of the motorcycle. Specifically, the side surface portions 36 can make the electric wire and the stay 56 which are arranged behind the reflector 32 less apparent. Further, the upper surface portion 37 and the front portion of the meter device 7 can make the supporting structure for the flashers 4, that is, the supported portions 41a and the stay 56 for supporting the supported portions 41a, less apparent.

Further, in the motorcycle 1, the upper surface portion 37 of the cover 35 is formed so as to overlap the front portion of the meter device 7 in the plan view of the motorcycle 1. With this structure, it is possible to make the supporting structure for the flashers 4 still less prominent

Further, in the motorcycle 1, the upper edges 37d of the upper surface portion 37 of the cover 35 extend rearward, below the extending portions 41, from the positions further forward than the supported portions 41a of the flashers 4. This makes the stay 56 still less prominent. Further, the upper edges 37d of the upper surface portion 37 are recessed so as to avoid the extending portions 41. With this structure, the flashers 4 can be arranged close to the cover 35 without involving interference between the flashers 4 and the headlight unit 3. As a result, it is possible to prevent the headlight unit 3 and the flashers 4 from being increased in size in the front-rear direction.

Further, in the motorcycle 1, the supported portions 41a of the flashers 4 are fixed onto the stay 56 fixed to the front suspension 6. With this structure, the supporting structure for the flashers 4 can be simplified.

Further, in the motorcycle 1, by using the stay 56 onto which the right and left flashers 4 are fixed, the headlight unit 3 is supported so that the irradiation direction thereof can be adjusted upward and downward. With this structure, the number of members for supporting the headlight unit 3 and the flashers 4 can be reduced.

Further, in the motorcycle 1, the flashing portions 42 respectively located at the end portions of the extending portions 41 are positioned further outward in the right-left direction of the motorcycle than the right and left side surface portions 36. With this structure, the visibility of the flashers 4 can be further improved.

Further, in the motorcycle 1, the front suspension 6 includes the right and left shock absorbers 61 extending diagonally in the vertical direction, and the brackets 62 and 63 bridge between the right and left shock absorbers 61. Further, the flashing portions 42 are arranged further outward in the right-left direction than the right and left shock absorbers 61, and the supported portions 41a are arranged further inward in the right-left direction than the right and left shock absorbers 61. With this arrangement, the distance between the headlight 30 and each of the flashing portions 42 can become larger without the stay 56, which supports the supported portions 41a, being increased in length. As a result, the visibility of the flashers 4 can be improved.

Further, in the motorcycle 1, the forefront portions 42c of the flashing portions 42 are located further forward than the rear end of the headlight 30 in the side view of the motorcycle. With this arrangement, the headlight unit 3 and the flashers 4 can be prevented from being increased in size in the front-rear direction.

Note that the present invention is not limited to the above-mentioned motorcycle 1, and various modifications are possible. For example, in the above description, only the lower portions of the supported portions 41a are covered with the upper surface portion 37. However, the entire supported portions 41a may be covered with the upper surface portion 37 from the front.

Further, in the above description, the rear ends 37e of the upper surface portion 37 are positioned further rearward than the rear ends 42a of the flashing portions 42. However, the rear ends 37e may be positioned further forward than the rear ends 42a.

## Claims

1. A motorcycle, comprising:
a headlight unit (3) including a headlight (30) arranged in front of a head pipe (51) supporting a steering shaft (17), the headlight unit (3) being supported by a front suspension (6); right and left flashers (4) arranged above the headlight unit (3), and supported by the front suspension (6); and
a meter device (7) arranged above the right and left flashers (4), wherein:
the headlight unit (3) is supported so that an irradiation direction of the headlight (30) is adjustable upward and downward independently of the right and left flashers (4);
each of the right and left flashers (4) includes
a supported portion (41a) fixed to a stay extending from the front suspension (6),
an extending portion (41) extending outward in the right-left direction of the motorcycle from the supported portion (41a), and
a flashing portion (42) housing a bulb (42d) and arranged at an end portion of the extending portion (41);
the headlight unit (3) comprises a cover (35) including
right and left side surface portions (36) arranged to cover a back surface of the headlight (30) from outer sides in the right-left direction, and
an upper surface portion (37) covering at least a part of each of the supported portions (41a) from the front wherein upper edges (37c, 37d) of the upper surface portion (37) are recessed so as to avoid the extending portions (41); and
a front portion (71a) of the meter device (7) is located further forward than the supported portions (41a).

2. The motorcycle according to claim 1, wherein the upper surface portion (37) of the cover (35) is formed to overlap the front portion (71a) of the meter device (7) in a plan view of the motorcycle.

3. The motorcycle according to claim 1, wherein an upper edge of the upper surface portion (37) extends rearward, below the extending portions (41) of the flashers (4), from a position further forward than the supported portions (41a) of the flashers (4).

4. The motorcycle according to claim 1, wherein the supported portions (41a) of the flashers (4) are fixed to a stay (56) fixed to the front suspension (6).

5. The motorcycle according to claim 4, wherein the headlight unit (3) is supported with the stay (56) so that the irradiation direction of the headlight (30) is adjustable upward and downward.

6. The motorcycle according to claim 5, wherein the headlight unit (3) is supported so that the irradiation direction of the headlight (30) is adjustable upward and downward with respect to the stay (56).

7. The motorcycle according to claim 1, wherein the flashing portions (42) are located further outward in the right-left direction than the right and left surface portions (36) of the cover (35), respectively.

8. The motorcycle according to claim 1, wherein:
the front suspension (6) includes
right and left shock absorbers (61) extending diagonally in the vertical direction, and
a bracket (62 or 63) bridges between the right shock absorber (61) and the left shock absorber (61); and
the flashing portions (42) are respectively located further outward in the right-left direction than the right and left shock absorbers (61), and the supported portions (41a) are located further inward in the right-left direction than the right and left shock absorbers (61).

9. The motorcycle according to claim 1, wherein forefront portions (42c) of the flashing portions (42) are located further forward than a rear end of the headlight (30) in a side view of the motorcycle.

## Patentansprüche

1. Ein Motorrad, das folgende Merkmale aufweist:
eine Scheinwerfereinheit (3) mit einem Scheinwerfer (30), die vor einem Kopfrohr (51) angeordnet ist, das eine Lenkwelle (17) trägt, wobei die Scheinwerfereinheit (3) durch eine vordere Aufhängung (6) getragen wird;
einen rechten und einen linken Blinker (4), die oberhalb der Scheinwerfereinheit (3) angeordnet sind und durch die vordere Aufhängung (6) getragen werden; und
eine Zählervorrichtung (7), die oberhalb des rechten und des linken Blinkers (4) angeordnet ist, wobei:
die Scheinwerfereinheit (3) so getragen wird, dass eine Strahlungsrichtung des Scheinwerfers (30) nach oben und nach unten unabhängig von dem rechten und dem linken Blinker (4) anpassbar ist;
sowohl der rechte als auch der linke Blinker (4) Folgendes aufweisen:
einen getragenen Abschnitt (41a), der an einer Strebe fixiert ist, die sich von der vorderen Aufhängung (6) erstreckt,
einen Erstreckungsabschnitt (41), der sich in der Rechts-Links-Richtung des Motorrads von dem getragenen Abschnitt (41a) nach außen erstreckt, und
einen Blinkabschnitt (42), der eine Lampe (42d) unterbringt und an einem Endabschnitt des Erstreckungsabschnitts (41) angeordnet ist;
wobei die Scheinwerfereinheit (3) eine Abdeckung (35) aufweist, die Folgendes aufweist:
einen rechten und einen linken Seitenoberflächenabschnitt (36), die angeordnet sind, um eine Rückoberfläche des Scheinwerfers (30) von Außenseiten in der Rechts-Links-Richtung zu bedecken, und
einen oberen Oberflächenabschnitt (37), der zumindest einen Teil jedes der getragenen Abschnitte (41a) von vorne bedeckt, wobei obere Ränder (37c, 37d) des oberen Oberflächenabschnitts (37) so zurückgesetzt sind, dass sie die Erstreckungsabschnitte (41) meiden; und
ein Vorderabschnitt (71) der Zählervorrichtung (7) weiter vorne angeordnet ist als die getragenen Abschnitte (41a).

2. Das Motorrad gemäß Anspruch 1, bei dem der obere Oberflächenabschnitt (37) der Abdeckung (35) so gebildet ist, dass er den Vorderabschnitt (71a) der Zählervorrichtung (7) in einer Draufsicht des Motorrads überlappt.

3. Das Motorrad gemäß Anspruch 1, bei dem sich ein oberer Rand des oberen Oberflächenabschnitts (37) von einer Position, die weiter vorne als die getragenen Abschnitte (41a) der Blinker (4) ist, nach hinten, unterhalb der Erstreckungsabschnitte (41) der Blinker (4), erstreckt.

4. Das Motorrad gemäß Anspruch 1, bei dem die getragenen Abschnitte (41a) der Blinker (4) an einer Strebe (56) fixiert sind, die an der vorderen Aufhängung (6) fixiert ist.

5. Das Motorrad gemäß Anspruch 4, bei dem die Scheinwerfereinheit (3) mit der Strebe (56) so getragen wird, dass die Strahlungsrichtung des Scheinwerfers (30) nach oben und nach unten anpassbar ist.

6. Das Motorrad gemäß Anspruch 5, bei dem die Scheinwerfereinheit (30) so getragen wird, dass die Strahlungsrichtung des Scheinwerfers (30) in Bezug auf die Strebe (56) nach oben und nach unten anpassbar ist.

7. Das Motorrad gemäß Anspruch 1, bei dem die Blinkabschnitte (42) sich in der Rechts-Links-Richtung weiter außen befinden als der rechte beziehungsweise linke Oberflächenabschnitt (36) der Abdeckung (35).

8. Das Motorrad gemäß Anspruch 1, bei dem:
die vordere Aufhängung (6) folgende Merkmale aufweist:
einen rechten und einen linken Stoßdämpfer (61), die sich in der Vertikalrichtung diagonal erstrecken, und
eine Stütze (62 oder 63), die zwischen dem rechten Stoßdämpfer (61) und
dem linken Stoßdämpfer (61) überbrückt; und
wobei sich die Blinkabschnitte (42) in der Rechts-Links-Richtung weiter außen befinden als der rechte bzw. der linke Stoßdämpfer (61) und sich die getragenen Abschnitte (41a) in der Rechts-Links-Richtung weiter innen befinden als der rechte und der linke Stoßdämpfer (61).

9. Das Motorrad gemäß Anspruch 1, bei dem sich Vorderseitenabschnitte (42c) der Blinkabschnitte (42) in einer Seitenansicht des Motorrads weiter vorne befinden als ein Rückende des Scheinwerfers (30).

## Revendications

1. Motocyclette comprenant:
une unité de phare (3) comportant un phare (30) disposé devant un tuyau de tête (51) supportant un arbre de direction (17), l'unité de phare (3) étant supportée par une suspension avant (6);
des clignotants droit et gauche (4) disposés au-dessus de l'unité de phare (3) et supportés par la suspension avant (6); et
un dispositif de mesure (7) disposé au-dessus des clignotants droit et gauche (4),
dans laquelle:
l'unité de phare (3) est supportée de sorte qu'une direction d'irradiation du phare (30) soit réglable vers le haut et vers le bas indépendamment des clignotants droit et gauche (4);
chacun des clignotants droit et gauche (4) comporte
une partie supportée (41a) fixée à une barre de support s'étendant à partir de la suspension avant (6),
une partie de prolongement (41) s'étendant vers l'extérieur dans la direction droite-gauche de la motocyclette à partir de la partie supportée (41a), et
une partie clignotante (42) abritant une ampoule (42d) et disposée sur une partie d'extrémité de la partie de prolongement (41);
l'unité de phare (3) comprend un couvercle (35) comportant
des parties de surface latérale droite et gauche (36) disposées de manière à couvrir une surface arrière du phare (30) depuis les côtés extérieurs dans la direction droite-gauche, et
une partie de surface supérieure (37) couvrant au moins une partie de chacune des parties supportées (41a) depuis l'avant, où les bords supérieurs (37c, 37d) de la partie de surface supérieure (37) sont en retrait de manière à éviter les parties de prolongement (41); et
une partie avant (71a) du dispositif de mesure (7) est située plus en avant que les parties supportées (41a).

2. Motocyclette selon la revendication 1, dans laquelle la partie de surface supérieure (37) du couvercle (35) est formée de manière à venir en recouvrement avec la partie avant (71a) du dispositif de mesure (7) dans une vue en plan de la motocyclette.

3. Motocyclette selon la revendication 1, dans laquelle un bord supérieur de la partie de surface supérieure (37) s'étend vers l'arrière, au-dessous des parties de prolongement (41) des clignotants (4), à partir d'une position plus en avant que les parties supportées (41a) des clignotants (4).

4. Motocyclette selon la revendication 1, dans laquelle les parties supportées (41a) des clignotants (4) sont fixées à une barre de support (56) fixée à la suspension avant (6).

5. Motocyclette selon la revendication 4, dans laquelle l'unité de phare (3) est supportée par la barre de support (56) de sorte que la direction d'irradiation du phare (30) soit réglable vers le haut et vers le bas.

6. Motocyclette selon la revendication 5, dans laquelle l'unité de phare (3) est supportée de sorte que la direction d'irradiation du phare (30) soit réglable vers le haut et vers le bas par rapport à la barre de support (56).

7. Motocyclette selon la revendication 1, dans laquelle les parties clignotantes (42) sont situées plus à l'extérieur dans la direction droite-gauche que les parties de surface respectivement droite et gauche (36) du couvercle (35).

8. Motocyclette selon l'une des revendications précédentes, dans laquelle:
la suspension avant (6) comporte
des amortisseurs droit et gauche (61) s'étendant en diagonale dans la direction verticale, et
un bras de support (62 ou 63) établit le pont entre l'amortisseur droit (61) et l'amortisseur gauche (61); et
les parties clignotantes (42) sont situées respectivement plus à l'extérieur dans la direction droite-gauche que les amortisseurs droit et gauche (61), et les parties supportées (41a) sont situées plus à l'intérieur dans la direction droite-gauche que les amortisseurs droit et gauche (61).

9. Motocyclette selon la revendication 1, dans laquelle les parties avant (42c) des parties clignotantes (42) sont situées plus en avant qu'une extrémité arrière du phare (30) dans une vue latérale du motocyclette.
